# EUROPEAN PATENT SPECIFICATION

(11) **EP 3 801 158 B1**
(45) Date of publication and mention of the grant of the patent: **21.08.2024**
(21) Application number: 19733158.0
(22) Date of filing: 24.05.2019
(51) Int. Cl.: A23G 9/12, A23G 9/28, A23G 9/22

(54) **CARTRIDGE-TYPE CONTAINER FOR A MACHINE FOR PRODUCING ICE CREAM**
KARTUSCHENARTIGER BEHÄLTER FÜR EINE MASCHINE ZUR HERSTELLUNG VON SPEISEEIS
RÉCIPIENT DE TYPE CARTOUCHE POUR UNE MACHINE DE PRODUCTION DE CRÈME GLACÉE

(30) Priority: 24.05.2018 IT 201800005682
(43) Date of publication of application: 14.04.2021
(73) Proprietor: De' Longhi Appliances S.r.l. Con Unico Socio, 31100 Treviso (IT)
(72) Inventor: BELLOMARE, Filippo, 31100 TREVISO (IT); BENEDETTI, Alessandro, 31100 TREVISO (IT); MORO, Andrea, 31100 TREVISO (IT)
(74) Representative: Petraz, Gilberto Luigi
(86) International application number: PCT/IT2019/050117
(87) International publication number: WO 2019/224858

(56) References cited:
- EP-A1- 2 208 421
- EP-A2- 0 106 814
- WO-A1-2015/006802
- WO-A1-2016/092485
- CN-U- 205 358 065
- US-A- 4 773 233
- US-A1- 2016 256 005

## Description

### FIELD OF THE INVENTION

The present invention concerns a cartridge-type container usable in a machine for the production of ice cream, of the type usable in a domestic or semi-professional environment. The container comprises a tub and a lid which can be coupled to each other to define a cartridge-type container which defines a single entity, which can be inserted in the machine during the ice cream production process to contain the ingredients and/or the ice cream, and can be removed therefrom at the end of the production process, for example to store the ice cream before consumption.

### BACKGROUND OF THE INVENTION

Substantially automatic machines for the production of ice cream in a domestic and/or professional environment are known.

Known machines generally comprise a support body in which a container, or tub, is disposed, in which the ingredients required to prepare the ice cream can be introduced and worked.

A mixing device is disposed inside the container with a normally vertical axial shaft which is rotated by a motorized drive mechanism to mix the ingredients during the ice cream production process.

Known machines generally also comprise a covering device, associated at the upper part of the support body, and suitable to cover, during use, the support body and the container in which the ingredients are contained.

The machine also comprises a cooling circuit by means of which the walls of the container, and therefore the ingredients therein, are brought to the temperature suitable to form the ice cream.

The cooling circuit normally comprises an evaporator device, a condenser, a compressor and an expansion member, through which a heat transfer fluid flows, which is condensed and evaporated cyclically.

In order to perform the process, a preparation and/or the ingredients necessary to produce the ice cream, and a liquid, for example water, milk or other, are normally disposed inside the container.

The ingredients, once inserted, begin to cool and are mixed and homogenized by the mixing device.

The machine can also comprise a timing mechanism to set and/or pre-memorize the mixing times necessary to obtain the ice cream according to the modalities required by the type of preparation.

The mixing of the preparation and the liquid, together with the low temperature induced by the cooled walls, facilitates the reaction that forms the ice cream until it is ready for consumption.

At the end of the ice cream production process, the mixture obtained is removed from the container using spatulas or similar tools.

One disadvantage of known machines is the fact that they present problems with cleaning the various components, since, in addition to the container for the ingredients, the support body can also become dirty during the introduction of the ingredients, during the production of the ice cream or also during its extraction.

The rotation of the mixing device, in fact, often causes splashes of the mixture to exit the container which can deposit on the support body.

A further disadvantage of the machines of the known type is that they do not allow an easy extraction of the ice cream.

A further disadvantage is that the container in which the ingredients are contained is easily accessible by a user even during the functioning of the machine itself, causing safety problems for users who could be injured due to contact with rotating parts of the mixing device. In fact, in the known machines the lid is normally screwed/attached to the support body of the machine, making access to the container easy with the safety problems mentioned above.

WO-A-2015/006802 (WO'802) describes a machine for the preparation of ice cream comprising a tub disposed inside a seating made in the body of the machine and a rotating paddle disposed inside the tub. The machine also comprises a lid suitable to close the tub when it is inserted in the seating in the body of the machine. The lid is provided with bayonet-type coupling members which can cooperate with mating members provided on the upper edge of the seating to close the tub and clamp it in a stable position inside the seating. In the solution described in WO'802 the tub is provided with a handle connected to the internal surface thereof, which obstructs, or effectively prevents, the insertion of the lid therein, and its stable coupling with the tub. Therefore, the tub of WO'802 cannot be used as a closed and sealed container when it is removed from the machine.

Document CN-U-205358065 describes a machine for the preparation of ice cream, which comprises a freezing tub with a double wall, that is, an internal surface structure and an external surface structure, between which a radiator is disposed. The internal and external surface structures are joined together by gaskets to keep the radiator and/or a fluid gel in position. The freezing tub therefore includes the cooling device directly inside it, and is therefore bulky and not very versatile, not allowing it to be transported and moved easily, and in particular it does not allow to be conveniently used as a closable container to store and deliver the ice cream.

Document US-A-2016/0256005 concerns an apparatus for mixing ingredients, which comprises a tub associable with a body of the machine, and a lid suitable to close the tub. The tub described in US-A-2016/0256005 is not suitable to prepare ice cream, as it does not have a suitable surface to exchange heat and cool the ingredients disposed therein. EP 0 106 814 A2 discloses a household ice-cream machine comprising an annular container in which a blade driven by a geared motor is rotatable, the container being releasably supported within an annular vessel so as to define an interspace containing a measured quantity of a liquid with a low freezing point.

One purpose of the present invention is to provide a container usable in a machine for the production of ice cream and a corresponding machine for the production of ice cream which overcome at least some of the disadvantages of the state of the art.

Another purpose of the present invention is to provide a container which guarantees the cleanliness of the support body of the machine, both during the ice cream production process and also during its insertion into/removal from it.

Another purpose of the present invention is to provide a container which can be inserted into and extracted from the machine in a closed condition, and which can be used autonomously, independently of its mounted condition on the machine, to store and dispense the ice cream.

Another purpose of the present invention is to provide a container that can also be used to store the ice cream, guaranteeing it maintains its organoleptic properties and/or its consumption.

Another purpose of the present invention is to provide a machine for the production of ice cream that is efficient in terms of heat transfer and cooling of the ingredients, allowing to reduce the times generally required to prepare the ice cream.

A further purpose is to provide an ice cream machine that requires minimal cleaning interventions.

Another purpose of the present invention is to provide an ice cream container and machine which allow an automatic removal of the ice cream, as well as facilitating and speeding up both the steps of loading the ingredients and also those of extracting the finished product.

Another purpose of the present invention is to provide a machine for the production of ice cream that is safe for a user.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe preferred characteristics of the invention.

In accordance with the above purposes, embodiments described here concern a cartridge-type container usable in a machine for the preparation of ice cream, which can be inserted in the machine during the preparation of the ice cream and removed therefrom at the end of the preparation.

By cartridge-type container we mean a container suitable to contain ingredients and/or liquid, semi-liquid and dense substances, which can be closed and can be transported and handled in an assembled condition and autonomously, as if it were a single entity.

In particular, the cartridge-type container according to the invention can be inserted and/or removed in a closed condition into/from a housing compartment of the machine, which is associated with a cooling circuit.

The container comprises a tub, which defines a chamber for working and storing the ice cream provided with an aperture, and a lid configured to selectively and stably close the aperture.

According to some embodiments, the tub is made of metal, or other material with a high heat exchange coefficient, suitable to exchange heat, during use, on the one hand with the cooling circuit cooperating with the housing compartment, and on the other with the ingredients and the mixture to be cooled and mixed.

The tub comprises a bottom wall and a lateral wall which define the chamber for working and storing the ice cream and a tubular body which extends into the chamber from the bottom wall along a central axis of the tub, and is provided with through apertures in correspondence with each end through which a drive shaft of the machine can pass during the insertion and/or removal of the tub and/or container into/from the machine.

The tub comprises first coupling means and the lid comprises second coupling means, mating with, and suitable to cooperate with, the first coupling means to define a stable and sealed reciprocal coupling between the two components, even in a condition in which the tub is removed from the machine.

In this way, it is possible to introduce the ingredients in the tub in a position separate from the machine for the production of ice cream, close it with the lid, and then insert the container in the cartridge-type assembled condition in a housing compartment of the machine itself, so as to reduce the operations necessary for cleaning the latter to a minimum.

It is also possible to remove the container from the machine in an assembled condition, for example to store the ice cream produced in a refrigerator before consuming it, or to transport it to a dispensing location, or to temporarily return it to a portable refrigeration or maintenance means, guaranteeing the seal and thus preserving the contents of the tub from external contaminations.

According to some embodiments, not forming part of the invention, the coupling means can comprise one or more of either interference means, same shape coupling means, screwing means, or bayonet systems so as to make the reciprocal coupling/decoupling simple and easy.

According to the present invention, the second coupling means comprise circumferential ridges suitable to deform during the insertion in the tub and to interfere with an upper circumferential edge of a lateral wall thereof, which defines at least part of the first coupling means.

This solution, on the one hand prevents possible spillages of the ingredients or the mixture in the chamber from occurring, and on the other hand guarantees that the mixture is maintained at temperature at the end of the preparation, allowing to remove it from the machine and place it in the freezer without having to expose it to the room temperature and therefore without subjecting it to differences in temperature.

According to some embodiments, the tub and/or the lid are provided with sealing elements suitable to hermetically seal the chamber for working and/or storing the ice cream.

According to some embodiments, the cartridge-type container is advantageously usable both in a machine with a vertical axis of rotation, and also in a machine with a horizontal, or generally inclined, axis of rotation, as the stable coupling between the lid and the tub prevents the possible spillage of the ingredients even in a horizontal/inclined position.

According to further embodiments, the lid is provided, in a central portion of the internal surface, with interference means suitable to cooperate with a mixing device positioned in the container, so as to guarantee the reciprocal coupling between the mixing device and the drive shaft.

According to the present invention, the lid is provided with at least one through aperture through which the ice cream produced can be delivered, and with a closing member selectively drivable to open or close the through aperture. In this way, it is possible to remove the ice cream from the container associated with the machine without dirtying the machine itself, and possibly pour the product already divided into portions ready for consumption.

Embodiments described here also concern a machine for the production of ice cream comprising a cartridge-type container and support body defining a housing compartment in which the cartridge-type container can be inserted in a removable manner.

The machine for the production of ice cream also comprises a cooling circuit configured to cool the housing compartment and the container disposed in the latter, and a mixing device disposed, during use, inside the container and configured to mix the ingredients during the ice cream preparation process.

According to some embodiments, the machine also comprises clamping devices provided on the support body and configured to selectively clamp the cartridge-type container in the housing compartment.

Embodiments described here also concern a method for the preparation of ice cream in a machine according to the invention, which provides to:
- insert the ingredients suitable for the preparation of an ice cream mixture in the tub;
- hermetically seal the tub with the lid obtaining a cartridge-type container in a closed and assembled form;
- insert the container in a closed and assembled form in the housing compartment; and
- start an ice cream preparation cycle.

### BRIEF DESCRIPTION OF THE DRAWINGS

These and other characteristics of the present invention will become apparent from the following description of some embodiments, given as a non-restrictive example with reference to the attached drawings wherein:

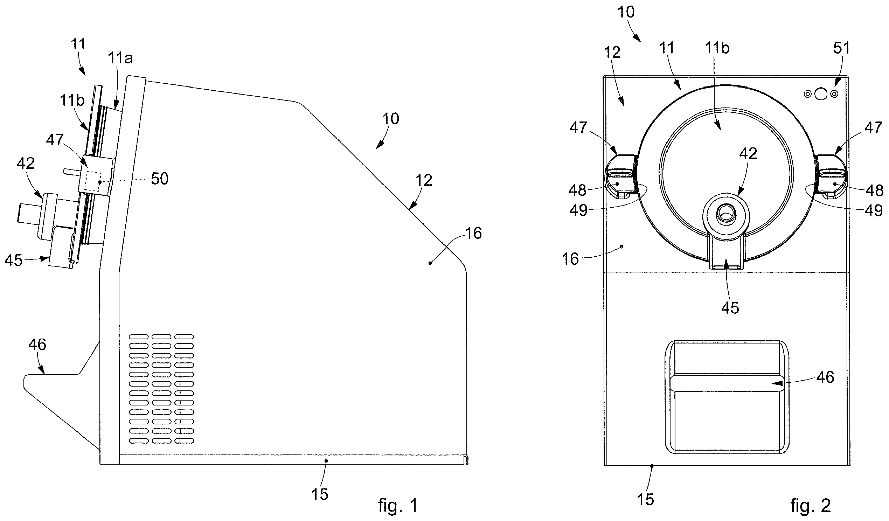

- fig. 1 is a schematic lateral view of a machine for the production of ice cream with a cartridge-type container according to some embodiments described here;
- fig. 2 is a schematic front view of the machine of fig. 1;
- fig. 3 is a schematic lateral section view of the machine of fig. 1 with the cartridge-type container partially extracted;
- fig. 4 is a schematic lateral section view of a container in an assembled condition;

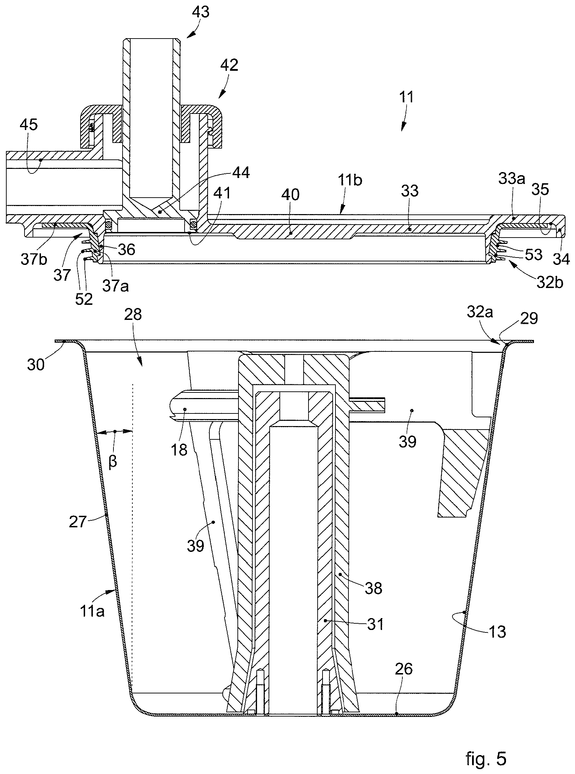

- fig. 5 is a schematic lateral view of the cartridge-type container of fig. 4 in an unassembled condition.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

Embodiments described here concern a cartridge-type container 11, comprising a tub 11a and a lid 11b stably associable with the tub 11a, usable in a machine 10 for the production of ice cream, preferably of a domestic or semi-professional type.

The machine 10 comprises a support body 12 internally hollow to define a housing seating 14 in which the components of the machine 10 can be housed.

The support body 12 can have a box-like, prismatic, cylindrical or conical shape, or a combination thereof.

According to some embodiments, the support body 12 can be made of heat-insulating material.

According to other embodiments, the support body 12 can be made of metal, for example with a metal sheet.

The support body 12 can comprise a bottom wall 15 defining a support base of the machine 10, and an external wall 16 which can substantially delimit its lateral and upper bulk.

The support body 12 is provided with a housing compartment 13, suitable to house a container, or tub 11a, to contain the ingredients and the ice cream during its preparation.

The machine 10 also comprises a cooling circuit 20 disposed at least in part in the housing seating 14 and cooperating with the housing compartment 13 to cool the walls of the latter and therefore the mixture in the container 11a disposed inside it.

The cooling circuit 20 can be, for example, a refrigerator machine which exploits, in a known way, the heat exchanges deriving from the phase changes of a heat transfer fluid.

The cooling circuit 20 can comprise a condenser 21, a compressor 22, an expansion member, not shown in the drawings, and an evaporator 23.

According to some embodiments, the evaporator 23 comprises a support casing 24 and a coiled pipe 25, inside which the heat transfer fluid can flow, wound around the support casing 24.

According to some embodiments, the support casing 24 itself defines at least part of the housing compartment 13, so as to be directly in contact with the walls of the tub 11a which have to be cooled.

According to possible solutions, the support casing 24 comprises an internal surface suitable to be in contact with a lateral wall 27 of the tub 11a, and an external surface cooperating with the pipe 25.

According to some embodiments, the casing 24 is provided on the external surface with a groove, made in its thickness, in which the coils of the pipe 25 can be inserted so as to increase the contact surface between them and the support casing 24, and make the heat exchange more efficient.

According to some embodiments, the evaporator 23 can be of the type described in patent application n. 102018000003202 entitled "EVAPORATOR DEVICE AND MACHINE FOR THE PRODUCTION OF ICE CREAM", filed on 02.03.2018 in the name of the Applicant.

According to some embodiments, the machine 10 for the production of ice cream also comprises a mixing device 18 disposed, during use, inside the tub 11a, and configured to mix the ingredients during the ice cream preparation process.

According to some embodiments, the mixing device 18 is rotated around an axis of rotation X by a drive shaft 17 connected to a motor member 19. The mixing device 18, rotating, removes the mixture which is progressively cooled by the cold walls of the tub 11a and at the same time incorporates air into it in order to make it creamy.

According to some embodiments, the machine 10 also comprises a control and command unit, not shown, configured to at least adjust the functioning of the cooling circuit 20 and of the motor member 19 by modifying the respective parameters, for example temperature and rotation speed, as a function of the production requirements of the ice cream and the type of final product to be obtained.

According to possible solutions, the machine 10 can be provided with a user interface 51, connected to the control and command unit, by means of which a user can command the start and/or stop of the ice cream production process, or possibly input operating parameters such as time intervals, temperatures, rotation speed, or others.

The user interface 51 can also comprise luminous, for example LED (Light Emitting Diode) or sound signaling elements, suitable to provide a signal to the user on the progress or the end of the ice cream preparation process, or possible problems and malfunctions of the machine 10.

According to some embodiments, the housing compartment 13 has its own axis of longitudinal development coinciding with the axis of rotation X and a through hole is provided on its bottom surface through which the drive shaft 17 passes.

According to some embodiments, the container 11 can be inserted/extracted in an assembled condition into/from the housing compartment 13 simply by translating it along the axis of rotation X.

According to some embodiments, the tub 11a is made of metallic material, or in any case of a material with a high heat exchange coefficient, suitable to produce, during use, an effective heat exchange with on the one hand the cooling circuit 20 of the machine 10 associated with the housing compartment 13, and on the other hand the ingredients and the mixture to be cooled.

The tub 11a comprises a bottom wall 26 and the lateral wall 27 extends from the bottom wall 26; the walls 26, 27 substantially define a chamber 28 to work and store the ice cream.

The upper edge of the lateral wall 27 opposite the bottom wall 26 defines an upper aperture 29 to access the chamber 28.

According to possible embodiments, the tub 11a can be provided with an annular portion 30 protruding radially from the upper aperture 29 toward the outside.

The tub 11a also comprises a tubular body 31, disposed along a central axis of its own which, during use, coincides with the axis of rotation X, and provided with through apertures in correspondence with each end through which the drive shaft 17 can pass during the insertion/removal of the tub 11a into/from the housing compartment 13.

According to some embodiments, the tub 11a has a truncated cone shape, mating with that of the housing compartment 13, that is, the respective lateral walls have the same angle of flare β with respect to the axis of rotation (X).

In this way, in addition to guaranteeing a correct and easy positioning of the tub 11a in the housing compartment 13, a good surface adhesion of the two components is guaranteed by same shape coupling. Consequently, the heat exchange between the evaporator 23 and the tub 11a is improved, increasing the efficiency of the machine 10 and decreasing the time required to prepare the ice cream.

According to some embodiments, the machine 10 has a substantially horizontal axis of rotation X.

With the term "substantially horizontal" we mean that the axis of rotation X can have an inclination with respect to a horizontal plane π at an angle of inclination α of no more than 20°.

In particular, the angle of inclination α can be comprised between 0° and ±20°.

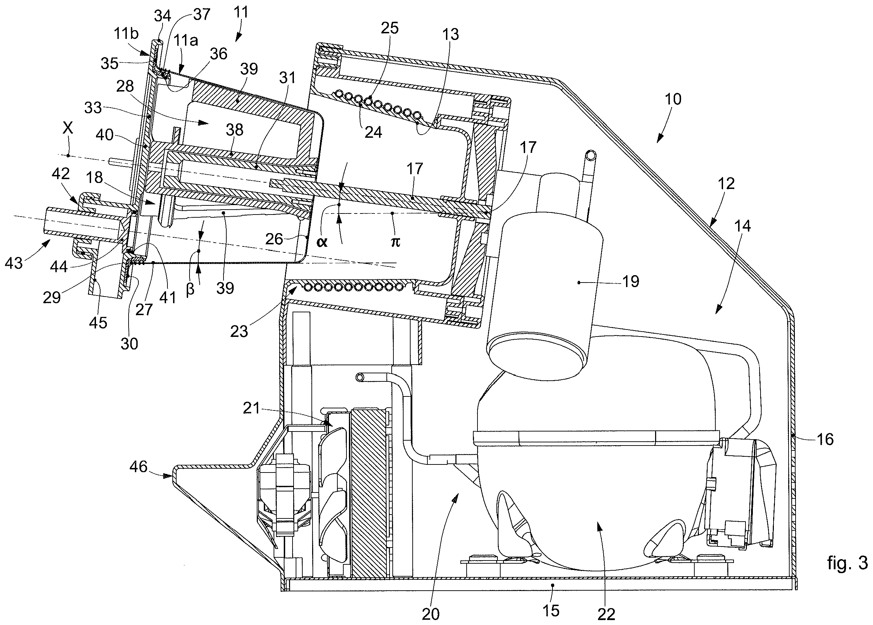

According to some embodiments, described for example with reference to fig. 3, the angle of inclination α is positive with respect to the horizontal.

According to possible variant embodiments, not shown, the angle of inclination α is negative with respect to the horizontal.

According to these embodiments, the aperture to access the housing compartment 13 is made in a lateral wall of the support body 12.

According to variant embodiments, the central axis X is inclined by an angle of inclination α of about 5°-10° with respect to the horizontal.

According to further embodiments, the amplitude of the angle of inclination α substantially corresponds to the angle of flare β of the tub 11a and of the housing compartment 13 so that, during use, the lateral wall 27 of the tub 11a lies on a substantially horizontal plane.

In this way the ingredients, or the mixture which gradually forms, tend not to slide toward the bottom wall 26 or toward the upper aperture 29, and can therefore be mixed correctly and in a homogenous manner.

Providing a horizontal axis of rotation X increases the heat exchange between the ingredients and the evaporator 23, as the ingredients, due to the force of gravity, always remain in contact with a portion of the lateral wall 27 of the tub 11a and therefore with the evaporator 23.

According to variant embodiments, not shown, the machine 10 has a substantially vertical axis of rotation, and the housing compartment 13 has the access aperture facing upwards.

The lid 11b is configured to selectively and directly close the upper aperture 29 of the tub 11a.

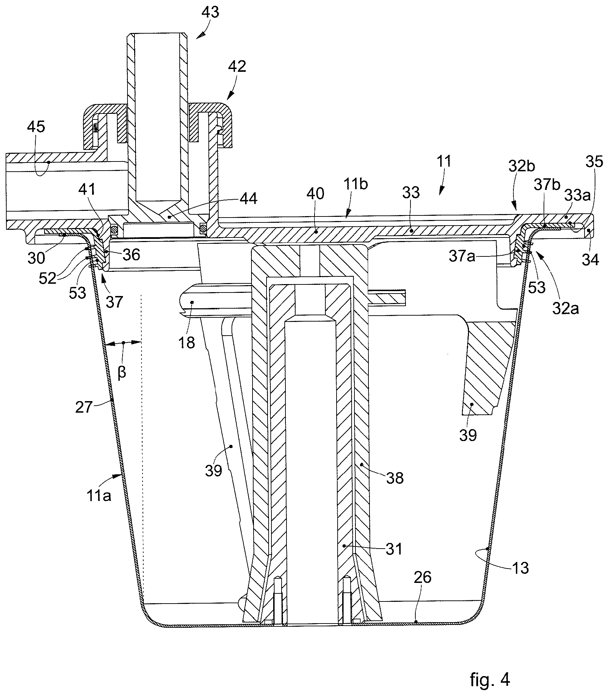

According to some embodiments, the tub 11a can be inserted and removed into/from the housing compartment 13 with the lid 11b associated therewith, that is, the tub 11a and the lid 11b can be associated with one another to form the cartridge-type container 11 as a single entity as shown by way of example in figs. 3 and 4.

The lid 11b and the tub 11a are provided with reciprocal coupling means 32a, 32b suitable to define a stable connection between the two components and hermetically seal the chamber 28 for working and/or storing the ice cream.

The tub 11a comprises first coupling means 32a and the lid 11b comprises second coupling means 32b, mating with and suitable to couple with the first coupling means 32a.

According to some embodiments, not forming part of the invention, the coupling means 32a, 32b can comprise one or more of either interference, same shape coupling or screwing means, or bayonet systems, so as to make the reciprocal coupling/decoupling simple and easy without needing to use tools of any kind.

In this way, it is possible to introduce the ingredients into the tub 11a away from the machine 10, close the tub 11a with the lid 11b, and subsequently insert the container 11 in its assembled condition in the housing compartment 13. At the end of the preparation, furthermore, the container 11 can be removed in its closed and assembled condition.

In this way, the machine 10, and in particular the support body 12, remain advantageously clean and are not dirtied either during the introduction of the ingredients or during the preparation and subsequent removal of the ice cream.

According to some embodiments, the lid 11b has a flat portion 33 provided with a peripheral portion 33a suitable to rest on the annular portion 30 of the tub 11a to close the upper aperture 29. For this purpose, the flat portion 33 can have a surface extension greater than the upper aperture 29, preferably even greater than the extension of the annular portion 30.

According to possible solutions, the flat portion 33 comprises a shaped peripheral edge 34 which defines a housing seating 35 for the annular portion 30. In this way, the lid 11b covers the entire upper extension of the tub 11a, guaranteeing the cleanliness of both the aperture 29 and also the chamber 28 and limiting if not preventing possible contaminations of the ingredients and/or of the ice cream contained therein.

According to further embodiments, the lid 11b comprises an annular protrusion 36, which extends from the face of the flat portion 33 disposed, during use, toward the tub 11a, and is configured to be inserted into the upper aperture 29 thereof.

According to some embodiments, the annular protrusion 36 is slightly inclined with respect to the flat portion 33, presenting in its entirety a truncated cone shape, mating with the shape of the tub 11a.

According to some embodiments, the upper aperture 29 can define at least part of the first coupling means 32a and the annular protrusion 36 can define at least part of the second coupling means 32b. The lid 11b comprises sealing elements 37, or gaskets, suitable to cooperate with the tub 11a in order to ensure a sealed closing of the chamber 28 and prevent possible unwanted spillages of the ingredients and/or ice cream from the latter.

According to some embodiments, the sealing elements 37 comprise an internal gasket 37a disposed on the side of the annular protrusion 36 facing toward the outside, and suitable to cooperate with the lateral wall 27 of the tub 11a.

According to possible solutions, the internal gasket 37a comprises the plurality of circumferential ridges 52 separated by hollows 53, each suitable to define a sealing element for the chamber 28.

The circumferential ridges 52 can also act at least in part as second coupling means 32b, being suitable to deform during insertion in the tub 11a and interfere with the lateral wall 27 thereof, which acts as first coupling means 32a.

The circumferential ridges 52 and the lateral wall 27 therefore define an interference coupling between the lid 11b and the tub 11a, which guarantees the hermetic seal of the chamber 28.

According to some embodiments, the sealing elements 37 can also comprise an external gasket 37b suitable to cooperate on one side with the annular portion 30 of the tub 11a, and on the other with the peripheral portion 33a of the lid 11b.

According to some embodiments, the internal gasket 37a and the internal gasket 37b can be connected to each other or made in a single body to improve the seal.

According to some embodiments, the mixing device 18 comprises a central tubular portion 38 suitable to be inserted on the tubular body 31 of the tub 11a, and one or more blades, or paddles 39, which extend transversely from the central tubular body 31.

According to possible embodiments, the lid 11b is configured to keep the central tubular body 38 of the mixing device 18 constrained to the drive shaft 17 through in the tubular body 31 when the container 11 is inserted in the housing compartment 12 of the machine 10.

According to possible embodiments, the flat portion 33 can comprise, in a central zone, an interference portion 40 suitable to interfere with an end of the central tubular body 38 so as to press it toward the bottom wall 26 of the container.

In this way, it is possible to constrain the mixing device 18 in the container 11 in a stable manner, without needing to use screws or other attachment elements and, at the same time, without interfering with the paddles 39 which can therefore have an extension corresponding to the entire length of the lateral wall 27 to effectively remove the cooled mixture therefrom.

The lid 11b is provided with at least one through aperture 41 and a closing member 42 selectively drivable to open or close the through aperture 41.

This conformation of the lid 11b is advantageous above all if the container 11 is used in a machine 10 with a horizontal axis of rotation X.

According to some embodiments, the closing member 42 comprises a piston 43 provided with a closed end 44 suitable to close the through aperture 41.

The piston 43 is configured mobile along a longitudinal axis of its own between a closed position in which the closed end 44 is adjacent to, and closes the through aperture 41, and an open position in which it is distant from the through aperture 41.

According to some embodiments, the closing member 42 is also provided with a delivery channel 45 through which the prepared ice cream can be delivered into a container, for example a cup, a cone, or suchlike, already portioned and ready for consumption.

According to some embodiments, at least during the delivery of the ice cream, the through aperture 41 can be positioned in correspondence with a horizontal lying plane of the lateral wall 27 so that the delivery channel 45 faces downward.

In this way, thanks to the rotation of the mixing device 18, the prepared ice cream is progressively removed from the lateral wall 27 and pushed toward the through aperture 41, from which it can advance in the channel 45 also due to the force of gravity.

According to some embodiments, the delivery channel 45 can be selectively put in communication with the through aperture 41 when the piston 43 is moved to its open position.

According to some embodiments, the movement of the piston 43 and therefore the opening/closing of the delivery channel can occur manually or automatically.

For this purpose, the machine 10 can comprise a support base 46, connected to or integrated in the support body 12, disposed below the aperture of the housing compartment 13, configured to support a container suitable to receive ice cream from the delivery channel 45.

According to further embodiments, the machine 10 comprises clamping devices 47 configured to selectively clamp the cartridge-type container 11 to the support body 12.

According to possible embodiments, the clamping devices 47 are disposed in proximity to the peripheral edge of the housing compartment 13 and are suitable to interfere with the lid 11b to prevent undesired movements of the latter and/or of the cartridge-type container 11 in an axial direction along the axis of rotation X.

According to some embodiments, two or more clamping devices 47 can be provided angularly distanced from each other around the edge of the housing compartment 13.

According to some embodiments, the clamping devices 47 can comprise a constraint element 48 selectively mobile between a position of non-interference, in which it is distant from the lid 11b and allows the insertion and removal of the lid 11b and possibly of the container 11, and a position of interference in which it is in contact with the lid 11b and prevents its removal.

According to some embodiments, the constraint elements 48 can be configured to interact with suitable flaps 49 provided in specific positions along the periphery of the lid 11b so as to guarantee a precise positioning and orientation of the latter with respect to the axis of rotation X.

According to further variant embodiments, the machine 10 can comprise switch devices 50, associated with the clamping devices 47, and configured to act on the motor 19 and stop the rotation of the mixing device 18 if the lid 11b is removed, or if the clamping systems 47 are open, or if the container/cartridge is removed.

According to some embodiments, the switch devices 50 can comprise magnetic switches, proximity sensors, or other sensors and/or switches suitable to detect whether the constraint elements 48 are in a condition of interference with the lid 11b or not.

The switch devices 50 can act directly on the motor or send a signal to a control and command unit of the machine 10, not shown, which in turn can command the motor 19.

In this way, if a user wants to open the lid 11b, or wants to remove the container or open the clamping systems 47, when the machine 10 is functioning, the safety problems that can occur with the solutions of the state of the art are avoided.

Embodiments described here also concern a method for the preparation of ice cream in a machine 10 according to the invention, which provides to:
- insert the ingredients suitable for the preparation of an ice cream mixture into the tub 11a;
- hermetically seal the tub 11a with the lid 11b by reciprocally coupling the first 32a and the second coupling means 32b, obtaining a cartridge-type container 11 in a closed and assembled form;
- insert the container 11 in a closed and assembled form in the housing compartment 13; and
- start an ice cream preparation cycle.

According to some embodiments, at the end of the ice cream preparation cycle, the method provides to remove the container 11 in closed and assembled form from the housing compartment 13.

The prepared ice cream can be consumed directly, or placed in the fridge, or freezer for a determinate period of time before it is consumed, without needing to open the container, and therefore to subject the mixture to sudden temperature changes, thus guaranteeing an excellent storage of the product.

According to possible variant embodiments, at the end of the ice cream preparation cycle it can also be provided to drive the closing member 42 to selectively put the through aperture 41 provided on the lid 11b in communication with the delivery channel 45, and directly deliver the prepared ice cream from the container 11, still inserted in the machine 10, into a receptacle.

## Claims

1. Cartridge-type container (11) usable in a machine (10) for the production of ice cream, and insertable in a housing compartment (13) of said machine (10) associated with a cooling circuit (20), the cartridge-type container (11) comprising:
- a tub (11a) comprising a bottom wall (26) and a lateral wall (27) configured to cooperate, during use, with said cooling circuit (20), the bottom wall and lateral wall (26, 27) defining a chamber (28) for working and preserving the ice cream provided with an upper aperture (29), and a tubular body (31) that extends into said chamber (28) from said bottom wall (26) along a central axis of said tub (11a), and provided with through apertures in correspondence with each end through which a drive shaft (17) of said machine (10) can pass,
***characterized in that*** it comprises
- a lid (11b) configured to selectively and stably close said aperture (29) so as to form, with said tub (11a), said cartridge-type container (11) as a single entity that can be transported and handled in a closed and assembled condition, wherein said tub (11a) is provided with first coupling means (32a) and said lid (11b) is provided with second coupling means (32b) mating with said first coupling means (32a) and comprises sealing elements (37) suitable to cooperate with said tub (11a) and define a stable and sealed reciprocal coupling between said tub (11a) and said lid (11b), and close said chamber (28) for working and preserving the ice cream,
wherein said second coupling means (32b) comprise circumferential ridges (52) suitable to deform during the insertion of the lid (11b) in the upper aperture (29) of the tub (11a) and to interfere with said lateral wall (27) defining said first coupling means (32a)
and said lid (11b) is provided with at least one through aperture (41) through which the ice cream can be delivered from said chamber (28), and with a closing member (42) selectively drivable to open or close said through aperture (41).

2. Container (11) as in claim 1, **characterized in that** said tub (11a) is provided with an annular portion (30) protruding radially toward the outside from said aperture (29) and said lid (11b) has a flat portion (33) provided with a peripheral portion (33a) suitable to rest on said annular portion (30), and an annular protrusion (36), configured to be inserted in said upper aperture (29).

3. Container (11) as in claim 2, **characterized in that** said flat portion (33) comprises a shaped peripheral edge (34) which defines a housing seating (35) for said annular portion (30).

4. Container (11) as in claim 2 or 3, **characterized in that** it comprises an internal gasket (37a) associated with the annular protrusion (36) and suitable to cooperate with the lateral wall (27) of said tub (11a).

5. Container (11) as in any claim from 2 to 4, **characterized in that** it comprises an external gasket (37b) suitable to cooperate on one side with the annular portion (30) of said tub (11a) and on the other with the peripheral portion (33a) of said lid (11b).

6. Container (11) as in any claim hereinbefore, **characterized in that** said lid (11b) is provided, in a central portion of the internal surface, with interference means (40) suitable to cooperate, during use, with a mixing device (18) of the machine (10) disposed on said tubular body (31), in order to guarantee the reciprocal coupling of said mixing device (18) and the drive shaft (17).

7. Container (11) as in claim 6, **characterized in that** said closing member (42) comprises a delivery channel (45) for the ice cream, and a piston (43) provided with a closed end (44) and mobile between a closed position in which said closed end (44) closes said through aperture (41) and an open position in which it puts said through aperture (41) in communication with said delivery channel (45).

8. Container (11) as in any claim hereinbefore, **characterized in that** said lid (11b) comprises flaps (49) provided in specific positions along its periphery, configured to cooperate with clamping devices (47) of the machine (10) disposed angularly distanced around the edge of said housing compartment (13).

9. Machine for the production of ice cream, **characterized in that** it comprises:
- a cartridge-type container (11) as in any claim hereinbefore;
- a support body (12) defining a housing compartment (13) suitable to receive and house said cartridge-type container (11);
- a cooling circuit (20) configured to cool at least part of said housing compartment (13) and said tub (11a) disposed in the latter;
- a mixing device (18) disposed, during use, inside said tub (11a), installed on a drive shaft (17) through in said tubular body (31), and configured to mix the ingredients during the ice cream preparation process.

10. Machine as in claim 9, **characterized in that** it comprises clamping devices (47) provided on said support body (12) and configured to selectively clamp said container (11) in said housing compartment (13), and to define a coupling of said mixing device (18) and said drive shaft (17).

11. Method for the preparation of ice cream in a machine (10) as in claim 9 or 10, **characterized in that** it provides to:
- insert the ingredients suitable for the preparation of an ice cream mixture into the tub (11a);
- hermetically seal the tub (11a) with the lid (11b) reciprocally coupling said first (32a) and said second (32b) coupling means, obtaining a cartridge-type container (11) in a closed and assembled form;
- insert said container (11) in its closed and assemble form into said housing compartment (13);
- start an ice cream preparation cycle;

12. Method for the preparation of ice cream as in claim 11, **characterized in that** at the end of the ice cream preparation cycle it provides to remove said container (11) in its closed and assembled form from said housing compartment (13).

13. Method for the preparation of ice cream as in claim 12, **characterized in that** at the end of the ice cream preparation cycle it provides to drive a closing member (42) to selectively put a through aperture (41) provided on said lid (11b) in communication with a delivery channel (45), and directly deliver the prepared ice cream from said container (11) into a receptacle.

## Patentansprüche

1. Kartuschenartiger Behälter (11), der in einer Maschine (10) zur Herstellung von Speiseeis verwendbar ist und in einen Aufnahmeraum (13) der Maschine (10) eingesetzt werden kann, der mit einem Kühlkreislauf (20) verbunden ist, wobei der kartuschenartige Behälter (11) umfasst:
- eine Wanne (11a), die eine Bodenwand (26) und eine Seitenwand (27) umfasst, die so konfiguriert sind, dass sie während des Gebrauchs mit dem Kühlkreislauf (20) zusammenwirken, wobei die Bodenwand und die Seitenwand (26, 27) eine Kammer (28) zum Bearbeiten und Aufbewahren des Speiseeises definieren, die mit einer oberen Öffnung (29) versehen ist, und einen rohrförmigen Körper (31), der sich von der Bodenwand (26) entlang einer Mittelachse der Wanne (11a) in die Kammer (28) erstreckt und an jedem Ende mit Durchgangsöffnungen versehen ist, durch die eine Antriebswelle (17) der Maschine (10) hindurchgehen kann, **dadurch gekennzeichnet, dass** er umfasst:
- einen Deckel (11b), der so konfiguriert ist, dass er die Öffnung (29) selektiv und stabil verschließt, um mit der Wanne (11a) den kartuschenartigen Behälter (11) als eine Einheit zu bilden, die in einem geschlossenen und zusammengesetzten Zustand transportiert und gehandhabt werden kann, wobei die Wanne (11a) mit ersten Kupplungsmitteln (32a) versehen ist, und der Deckel (11b) mit zweiten Kupplungsmitteln (32b) versehen ist, die mit den ersten Kupplungsmitteln (32a) zusammenpassen, und Dichtungselemente (37) umfasst, die geeignet sind, mit der Wanne (11a) zusammenzuwirken und eine stabile und abgedichtete wechselseitige Kupplung zwischen der Wanne (11a) und dem Deckel (11b) zu bilden und die Kammer (28) zur Bearbeitung und Aufbewahrung des Speiseeises zu verschließen,
wobei die zweiten Kupplungsmittel (32b) Umfangsrippen (52) umfassen, die geeignet sind, sich beim Einsetzen des Deckels (11b) in die obere Öffnung (29) der Wanne (11a) zu verformen und mit der Seitenwand (27), die die ersten Kupplungsmittel (32a) definiert, in Eingriff zu kommen,
und der Deckel (11b) mit mindestens einer Durchgangsöffnung (41), durch die das Speiseeis aus der Kammer (28) abgegeben werden kann, und mit einem Verschlusselement (42), das selektiv zum Öffnen oder Verschließen der Durchgangsöffnung (41) antreibbar ist, versehen ist.

2. Behälter (11) nach Anspruch 1, **dadurch gekennzeichnet, dass** die Wanne (11a) mit einem ringförmigen Abschnitt (30) versehen ist, der von der Öffnung (29) radial nach außen vorsteht, und der Deckel (11b) einen flachen Abschnitt (33), der mit einem Umfangsabschnitt (33a) versehen ist, der geeignet ist, auf dem ringförmigen Abschnitt (30) aufzuliegen, und einen ringförmigen Vorsprung (36), der so konfiguriert ist, dass er in die obere Öffnung (29) eingesetzt werden kann, aufweist.

3. Behälter (11) nach Anspruch 2, **dadurch gekennzeichnet, dass** der flache Abschnitt (33) eine geformte Umfangskante (34) aufweist, die einen Gehäusesitz (35) für den ringförmigen Abschnitt (30) definiert.

4. Behälter (11) nach Anspruch 2 oder 3, **dadurch gekennzeichnet, dass** er eine innere Dichtung (37a) aufweist, die mit dem ringförmigen Vorsprung (36) verbunden und geeignet ist, mit der Seitenwand (27) der Wanne (11a) zusammenzuwirken.

5. Behälter (11) nach irgendeinem der Ansprüche 2 bis 4, **dadurch gekennzeichnet, dass** er eine äußere Dichtung (37b) aufweist, die geeignet ist, auf einer Seite mit dem ringförmigen Abschnitt (30) der Wanne (11a) und auf der anderen Seite mit dem Umfangsabschnitt (33a) des Deckels (11b) zusammenzuwirken.

6. Behälter (11) nach irgendeinem der vorhergehenden Ansprüche, **dadurch gekennzeichnet, dass** der Deckel (11b) in einem zentralen Abschnitt der Innenfläche mit Eingriffsmitteln (40) versehen ist, die geeignet sind, während des Gebrauchs mit einer Mischvorrichtung (18) der Maschine (10) zusammenzuwirken, die auf dem rohrförmigen Körper (31) angeordnet ist, um die gegenseitige Kupplung der Mischvorrichtung (18) und der Antriebswelle (17) zu gewährleisten.

7. Behälter (11) nach Anspruch 6, **dadurch gekennzeichnet, dass** das Verschlusselement (42) einen Abgabekanal (45) für das Speiseeis und einen Kolben (43) umfasst, der mit einem geschlossenen Ende (44) versehen ist und zwischen einer geschlossenen Position, in der das geschlossene Ende (44) die Durchgangsöffnung (41) verschließt, und einer offenen Position, in der die Durchgangsöffnung (41) mit dem Abgabekanal (45) in Verbindung gebracht wird, beweglich ist.

8. Behälter (11) nach irgendeinem der vorhergehenden Ansprüche, **dadurch gekennzeichnet, dass** der Deckel (11b) Klappen (49) aufweist, die an bestimmten Positionen entlang seines Umfangs vorgesehen und so konfiguriert sind, dass sie mit Klemmvorrichtungen (47) der Maschine (10) zusammenwirken, die in einem Winkelabstand um den Rand des Aufnahmeraums (13) herum angeordnet sind.

9. Maschine zur Herstellung von Speiseeis, **dadurch gekennzeichnet, dass** sie umfasst:
- einen kartuschenartigen Behälter (11) gemäß irgendeinem der vorhergehenden Ansprüche;
- einen Trägerkörper (12), der einen Aufnahmeraum (13) definiert, der geeignet ist, den kartuschenartigen Behälter (11) aufzunehmen und zu beherbergen;
- einen Kühlkreislauf (20), der so konfiguriert ist, dass er zumindest einen Teil des Aufnahmeraums (13) und der darin angeordneten Wanne (11a) kühlt;
- eine Mischvorrichtung (18), die während des Gebrauchs im Inneren der Wanne (11a) angeordnet ist, auf einer Antriebswelle (17) durch den röhrenförmigen Körper (31) hindurch installiert ist und so konfiguriert ist, dass sie die Zutaten während des Speiseeisherstellungsprozesses mischt.

10. Maschine nach Anspruch 9, **dadurch gekennzeichnet, dass** sie Klemmvorrichtungen (47) umfasst, die an dem Trägerkörper (12) vorgesehen und so konfiguriert sind, dass sie den Behälter (11) in dem Aufnahmeraum (13) selektiv festklemmen und eine Kupplung der Mischvorrichtung (18) und der Antriebswelle (17) definieren.

11. Verfahren zur Herstellung von Speiseeis in einer Maschine (10) gemäß Anspruch 9 oder 10, **dadurch gekennzeichnet, dass** es vorsieht:
- Einfüllen der für die Zubereitung einer Speiseeismischung geeigneten Zutaten in die Wanne (11a);
- hermetisches Verschließen der Wanne (11a) mit dem Deckel (11b) durch wechselseitiges Kuppeln der ersten (32a) und zweiten (32b) Kupplungsmittel, wodurch ein kartuschenartiger Behälter (11) in geschlossener und zusammengesetzter Form erhalten wird;
- Einsetzen des Behälters (11) in seiner geschlossenen und zusammengesetzten Form in den Aufnahmeraum (13);
- Starten eines Speiseeis-Zubereitungszyklus.

12. Verfahren zur Zubereitung von Speiseeis nach Anspruch 11, **dadurch gekennzeichnet, dass** es am Ende des Speiseeis-Zubereitungszyklus vorsieht, den Behälter (11) in seiner geschlossenen und zusammengesetzten Form aus dem Aufnahmeraum (13) zu entnehmen.

13. Verfahren zur Zubereitung von Speiseeis nach Anspruch 12, **dadurch gekennzeichnet, dass** es am Ende des Speiseeis-Zubereitungszyklus vorsieht, ein Verschlusselement (42) anzutreiben, um eine an dem Deckel (11b) vorgesehene Durchgangsöffnung (41) selektiv mit einem Ausgabekanal (45) in Verbindung zu bringen und das zubereitete Speiseeis aus dem Behälter (11) direkt in ein Behältnis abzugeben.

## Revendications

1. Contenant de type cartouche (11) utilisable dans une machine (10) pour la production de crème glacée, et insérable dans un compartiment de logement (13) de ladite machine (10) associé à un circuit de refroidissement (20), le contenant de type cartouche (11) comprenant :
- une cuve (11a) comprenant une paroi inférieure (26) et une paroi latérale (27) configurées pour coopérer, en utilisation, avec ledit circuit de refroidissement (20), la paroi inférieure et la paroi latérale (26, 27) définissant une chambre (28) pour travailler et conserver la crème glacée, pourvue d'une ouverture supérieure (29), et un corps tubulaire (31) qui s'étend dans ladite chambre (28) à partir de ladite paroi inférieure (26) le long d'un axe central de ladite cuve (11a), et pourvu d'ouvertures traversantes en correspondance avec chaque extrémité à travers lequel un arbre d'entraînement (17) de ladite machine (10) peut passer,
caractérisé ce qu'il comprend
- un couvercle (11b) configuré pour fermer sélectivement et de manière stable ladite ouverture (29) de manière à former, avec ladite cuve (11a), ledit contenant de type cartouche (11) en une entité unique qui peut être transportée et manipulée dans un état fermé et assemblé, dans lequel ladite cuve (11a) est pourvue de premiers moyens de couplage (32a) et ledit couvercle (11b) est pourvu de seconds moyens de couplage (32b) s'appariant avec lesdits premiers moyens de couplage (32a) et comprend des éléments d'étanchéité (37) appropriés pour coopérer avec ladite cuve (11a) et définir un couplage réciproque stable et étanche entre ladite cuve (11a) et ledit couvercle (11b), et fermer ladite chambre (28) pour travailler et conserver la crème glacée,
dans lequel lesdits seconds moyens de couplage (32b) comprennent des nervures circonférentielles (52) appropriées pour se déformer lors de l'insertion du couvercle (11b) dans l'ouverture supérieure (29) de la cuve (11a) et pour interférer avec ladite paroi latérale (27) définissant lesdits premiers moyens de couplage (32a)
et ledit couvercle (11b) est pourvu d'au moins une ouverture traversante (41) à travers laquelle la crème glacée peut être distribuée à partir de ladite chambre (28), et d'un élément de fermeture (42) pouvant être entraîné sélectivement pour ouvrir ou fermer ledit ouverture traversante (41).

2. Contenant (11) selon la revendication 1, **caractérisé en ce que** ladite cuve (11a) est pourvue d'une partie annulaire (30) faisant saillie radialement vers l'extérieur à partir de ladite ouverture (29) et ledit couvercle (11b) présente une partie plate (33) pourvue d'une partie périphérique (33a) appropriée pour reposer sur ladite partie annulaire (30), et une saillie annulaire (36), configurée pour être insérée dans ladite ouverture supérieure (29).

3. Contenant (11) selon la revendication 2, **caractérisé en ce que** ladite partie plate (33) comprend un bord périphérique mis en forme (34) qui définit un siège de logement (35) pour ladite partie annulaire (30).

4. Contenant (11) selon la revendication 2 ou 3, **caractérisé en ce qu'**il comprend un joint d'étanchéité interne (37a) associé à la saillie annulaire (36) et approprié pour coopérer avec la paroi latérale (27) de ladite cuve (11a).

5. Contenant (11) selon l'une quelconque des revendications 2 à 4, **caractérisé en ce qu'**il comprend un joint d'étanchéité externe (37b) approprié pour coopérer d'un côté avec la partie annulaire (30) de ladite cuve (11a) et de l'autre côté avec la partie périphérique (33a) dudit couvercle (11b).

6. Contenant (11) selon l'une quelconque des revendications précédentes, **caractérisé en ce que** ledit couvercle (11b) est pourvu, dans une partie centrale de la surface interne, de moyens d'interférence (40) appropriés pour coopérer, en utilisation, avec un dispositif de mélange (18) de la machine (10) disposé sur ledit corps tubulaire (31), afin de garantir le couplage réciproque dudit dispositif de mélange (18) et de l'arbre d'entraînement (17).

7. Contenant (11) selon la revendication 6, **caractérisé en ce que** ledit élément de fermeture (42) comprend un canal de distribution (45) pour la crème glacée, et un piston (43) pourvu d'une extrémité fermée (44) et mobile entre une position fermée dans laquelle ladite extrémité fermée (44) ferme ladite ouverture traversante (41) et une position ouverte dans laquelle il met ladite ouverture traversante (41) en communication avec ledit canal de distribution (45).

8. Contenant (11) selon l'une quelconque des revendications précédentes, **caractérisé en ce que** ledit couvercle (11b) comprend des volets (49) prévus dans des positions spécifiques le long de sa périphérie, configurés pour coopérer avec des dispositifs de serrage (47) de la machine (10) disposés à une distance angulaire autour du bord dudit compartiment de logement (13).

9. Machine pour la production de crème glacée, **caractérisée en ce qu'**elle comprend :
- un contenant de type cartouche (11) selon l'une quelconque des revendications précédentes ;
- un corps de support (12) définissant un compartiment de logement (13) approprié pour recevoir et loger ledit contenant de type cartouche (11) ;
- un circuit de refroidissement (20) configuré pour refroidir au moins une partie dudit compartiment de logement (13) et ladite cuve (11a) disposée dans ce dernier ;
- un dispositif de mélange (18) disposé, en utilisation, à l'intérieur de ladite cuve (11a), installé sur un arbre d'entraînement (17) à travers ledit corps tubulaire (31), et configuré pour mélanger les ingrédients lors du processus de préparation de crème glacée.

10. Machine selon la revendication 9, **caractérisée en ce qu'**elle comprend des dispositifs de serrage (47) prévus sur ledit corps de support (12) et configurés pour serrer sélectivement ledit contenant (11) dans ledit compartiment de logement (13), et pour définir un couplage dudit dispositif de mélange (18) et dudit arbre d'entraînement (17).

11. Procédé de préparation de crème glacée dans une machine (10) selon la revendication 9 ou 10, **caractérisé en ce qu'**il comprend les étapes consistant à :
- insérer les ingrédients appropriés pour la préparation d'un mélange de crème glacée dans la cuve (11a) ;
- sceller hermétiquement la cuve (11a) avec le couvercle (11b) couplant réciproquement lesdits premiers (32a) et seconds (32b) moyens de couplage, en obtenant un contenant de type cartouche (11) sous une forme fermée et assemblée ;
- insérer ledit contenant (11) dans sa forme fermée et assemblée dans ledit compartiment de logement (13) ;
- commencer un cycle de préparation de crème glacée ;

12. Procédé de préparation de crème glacée selon la revendication 11, **caractérisé en ce qu'**à la fin du cycle de préparation de crème glacée, il prévoit de retirer ledit contenant (11) sous sa forme fermée et assemblée à partir dudit compartiment de logement (13).

13. Procédé de préparation de crème glacée selon la revendication 12, **caractérisé en ce qu'**à la fin du cycle de préparation de crème glacée, il prévoit d'entraîner un élément de fermeture (42) pour mettre de manière sélective une ouverture traversante (41) prévue sur ledit couvercle (11b) en communication avec un canal de distribution (45), et distribuer directement la crème glacée préparée à partir dudit contenant (11) dans un réceptacle.
